Europäisches Patentamt

European Patent Office

Office européen des brevets

(19)

(11) Publication number: **0 328 704**
**A1**

# EUROPEAN PATENT APPLICATION

(12)

(21) Application number: 88102360.0

(22) Date of filing: 18.02.88

(51) Int. Cl.⁴: **A47J 31/52 , A47J 31/00**

(43) Date of publication of application:
23.08.89 Bulletin 89/34

(84) Designated Contracting States:
**AT BE CH DE ES FR LI LU NL**

(71) Applicant: **LA SAN MARCO S.p.A.**
**Via F.lli Venuti 6**
**I-34072 Gradisca D'Isonzo (Go)(IT)**

(72) Inventor: **Rorato, Claudio**
**Via Cormons 7**
**I-33100 Udine(IT)**

(74) Representative: **D'Agostini, Giovanni, Dr.**
**D'AGOSTINI ORGANIZZAZIONE n. 17 via**
**G.Giusti**
**I-33100 Udine(IT)**

(54) **Coffee-machine run by a microprocessor with improved control for infusion equipped with several units.**

(57) A COFFEE-MACHINE RUN BY A MICROPRO-
CESSOR HAVING AN IMPROVED DEVICE FOR IN-
FUSION EQUIPPED WITH SEVERAL UNITS, having
control means for delivery of coffee preset to actuate
each distributor means (17) associated with a micro-
processor system (M) which lines up the distributor
units.

FIG.1

## COFFEE-MACHINE RUN BY A MICROPROCESSOR WITH IMPROVED CONTROL FOR INFUSION EQUIPPED WITH SEVERAL UNITS

The subject of the present invention is a COFFEE-MACHINE RUN BY MICROPROCESSOR WITH AN IMPROVED CONTROL FOR INFUSION EQUIPPED WITH SEVERAL UNITS.

The innovation has a particular and convenient, although not exclusive, application for bar and restaurant service.

The procedure for the preparation of coffee by espresso coffee-machines is known in the present state of art. This procedure consists in applying a cup having a filter of suitable substance, containing a set quantity of ground coffee, under a pressurized hot water distributor, so that the water is obliged to pass through the layer of coffee in said filter and then discharges from a corresponding delivery spout. It is necessary to have a pressure which varies from 8-10 bar for a normal delivery. However, this pressure causes the inconvenience that a turbulent flow passes through the layer of coffee blend and does not adequately exploit the coffee powder. The ideal condition to extract the best essences consists in wetting the blend for a few seconds so as to create a swelling of the granules before delivery. This process is called "infusion".

A first advantageous solution utilized in machines having several units is to foresee suitable devices to firstly let water at low pressure (e.g. 1-2 bar) into the ground coffee so as to allow the first wetting of the coffee, and then at normal delivery pressure (8-10 bar) for the discharge of the coffee. A cup of coffee which is more homogeneous and complete with all the aromas which can be given by the blend is thus obtained. These solutions are:
- either of hydraulic-mechanical nature which, while permitting the utilization on machines having several units, have the inconvenience of having to foresee corresponding devices associated to each delivery unit;
- or of electric/electronic nature which involve lag means for pump connection allowing firstly the inlet of water at the normal mains supply pressure or, if this is too low, at the normal steam pressure which is present at that moment in the exchangers (1-2 bar), and then at the usual working pressure (8-10 bar) by activating the pump with said lag. This solution, which is advantageous in respect to the previous one due to the simplification given, has however the inconvenience of being able to function on machines with a single distributor unit only.

The scope of the present invention is to eliminate the above inconveniences, thus allowing the utilization of the second system in machines having several distributor units.

According to the characteristics given in the enclosed claims, the present invention solves the problem by equipping a coffee-machine of the type having a pressurized, controlled temperature boiler with several heat exchangers to feed water by pump to the respective delivery units and solenoid valve means, utilizing lag means of the pump delivery coupling to the respective distributor unit with prior conveying of water at the normal mains pressure or, if the pressure is too low, at the steam pressure present at that moment in the exchanger, which further comprises:
- means of control for delivery of coffee with infusion or otherwise, preset to actuate each distributor means;
- a microprocessor system connected to said solenoid valve means respectively to said lag means and to said control means for delivery of coffee with infusion or otherwise, able to:
- store the distributor unit subjected to the infusion control and line up the respective commands according to sequence;
- transmit a command in order to said sequence to the corresponding solenoid valve respective lag means of the distributor unit in question, so that it actuates the following cycles for each unit memorized in logical lined-up sequence:
- lag of pump delivery to said distributor unit;
- inlet of water feed at mains pressure or at the steam pressure present at that moment in the exchanger (e.g. 0.5-2 bar), for a preset quantity or time necessary for a convenient infusion time;
- the real delivery through said pump at normal delivery pressure (e.g. 4-16 bar).

The machine conveniently foresees that said lag means consists in a timer device common to all the distributor units which works on the sole relay of the pump, the corresponding solenoid valve being foreseen of the 3-way type. This is normally closed and when the delivery key of the unit is pressed, it puts the mains net in communication, controlled by a check and overpressure valve, through the respective exchangers in the boiler.

It is important to further note that the said timer device can be set by a regulation means which works on the microprocessor with analogue-digital convertor, memory, programme and microprocessor.

The advantages obtained from this solution consist in the possibility of realizing a machine with several distributor units of extreme simplicity and, consequently, at low production cost, as the actual complicated hydraulic and mechanical mechanisms are eliminated.

The invention is hereafter explained in more detail with the help of the drawings showing one of the preferential realization solutions, the execution details of which are not to be held as limiting but only as examples.

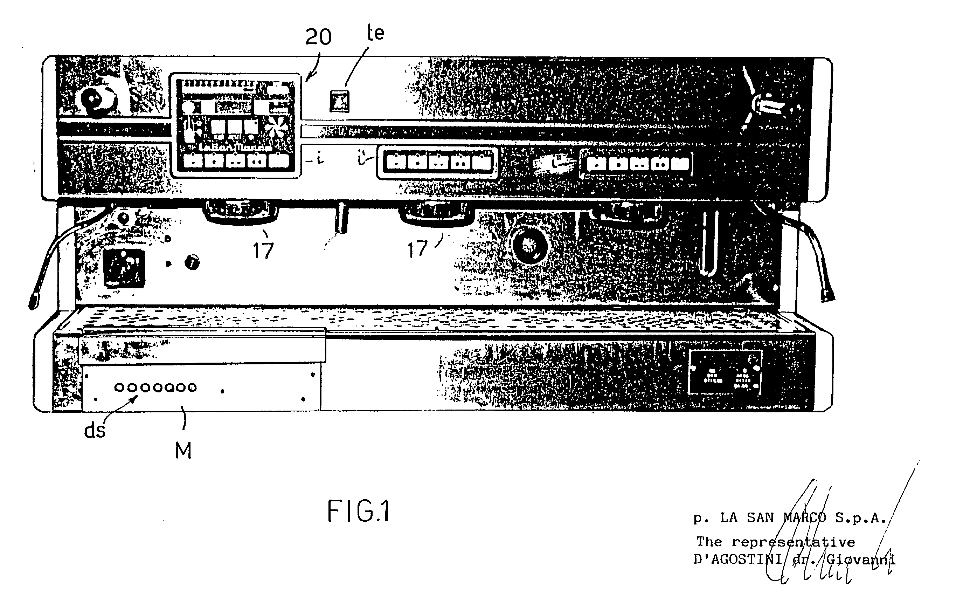

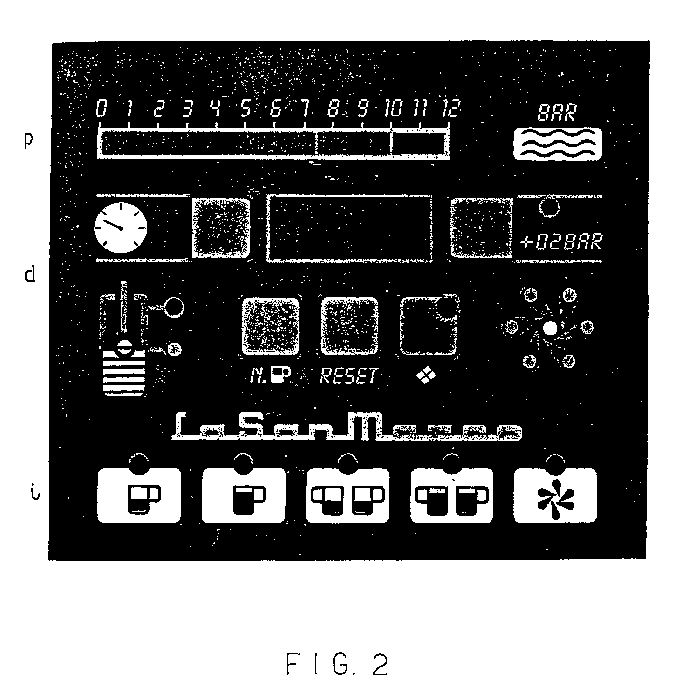

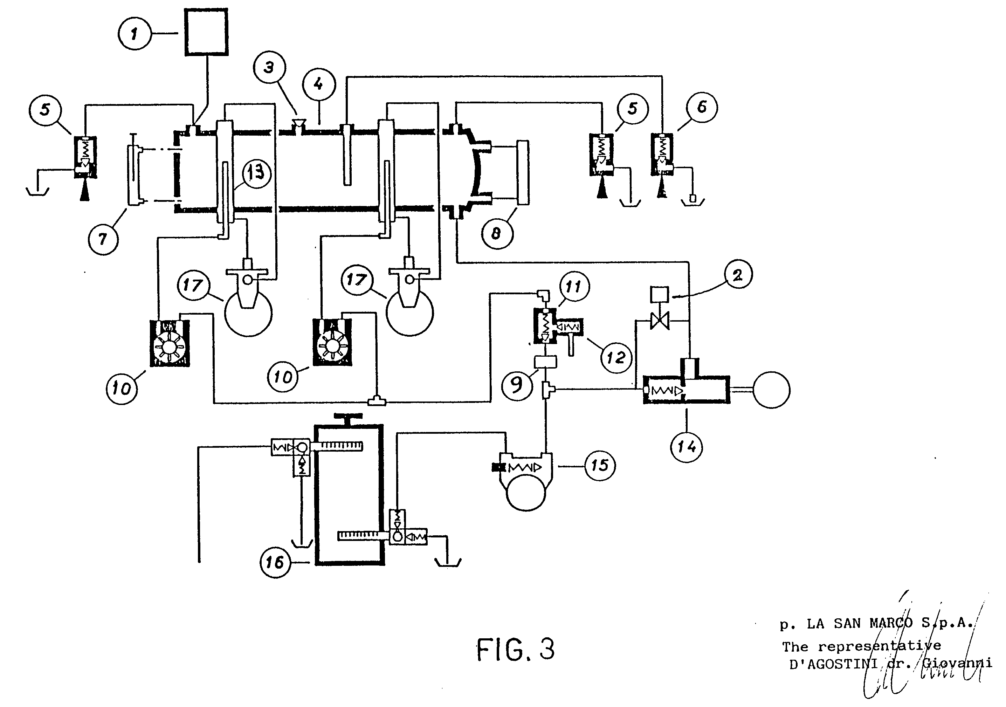

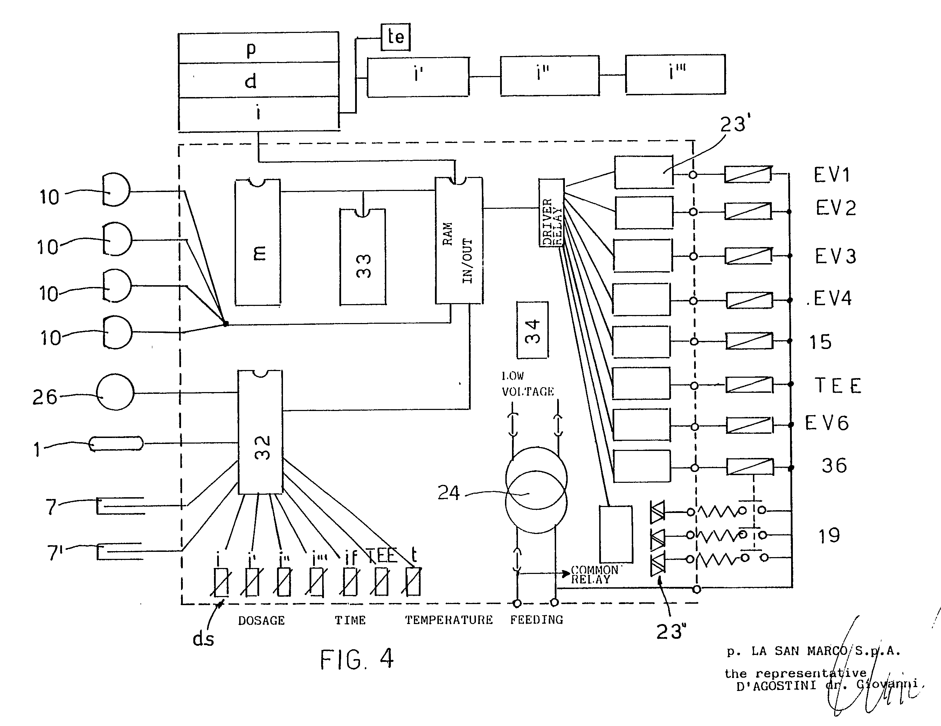

Figure 1 gives a front perspective of the machine from the operator's side; Figure 2 gives an enlarged view of the respective control panel; Figure 3 gives a hydraulic diagram of the respective operation; Figure 4 gives the block diagram of the microprocessor system and respective connections.

As can be seen from the above-mentioned figures, the invention presents above the first distributor (17) a multi-function control panel (20) comprising:

- a luminous bar indicating the variation in pressure from 0-12 bar (pressure of mains or of the pump);
- beneath this there is a clock sign and a boiler temperature conversion press-switch which is given on the display at the side, in pressure, by means of computerized processing of the stored temperature data into data equivalent to steam saturation pressure;

another press-switch is foreseen next to this to activate or disactivate an intensive work condition with, in this case, corresponding switch-on or otherwise of a luminous pilot light beneath which is written " + 02 BAR". This press-switch increases or otherwise the working pressure of the boiler from the normal setting e.g. 0.9 bar to + 0.2, that is to say, equal to 1.1 bar;

- beneath this there is a level indicator design having luminous minimum and maximum signs, beside this there is a programming key for the number of coffees, and then a reset key to zero the number of coffees or, combined with the keys below or with the tea key which is not on the panel, or with the key next to it on the right (infusion), to programme the desired dosage of coffee, of water for tea, of the boiler temperature and of lag in infusion time. These values are set by trimmer (ds) on the front of the respective microprocessor system (M) accessible from outside and visualized on said display between the two upper keys. Lastly, on the extreme righthand side, there is a fan design with a rose of luminous pilot lights which the microprocessor system switches on by transmitting the delivery impulse count sequence of the respective volumetric meters of the distributors (10) so as to visualize the delivery in a dynamic manner, thus giving the operator the impression of seeing a fan in motion, with the speed in proportion to the delivery.

Five control keys are arranged under this for the distribution of the types of coffees, having respective explicative designs showing the service possibilities for an espresso coffee (strong coffee), two espresso coffee (strong coffees), one weak coffee, two weak coffees and for continuous delivery with a manual stop (i). These last controls are also placed above the other corresponding distributor units (i',i",...)

A key for tea (te) is also provided, which is placed at the side above said panel.

The machine, as shown in Fig. 3 in which only two distributor units (17) are schematically shown as an example, a steam-charged boiler (4) having a safety valve for overpressure (3), a temperature-indicating probe (1), two distributors for steam emission (5), a hot water distributor (6), an electric transducer for water pressure (9) arranged downstream of the boiler check valve (11) with an expansion valve (12) visualized on the display (p), an optic level (8) and an automatic level (7). It can be seen that each distributor unit (17) is associated with a delivery meter (10) which continuously controls the delivery by means of electric impulses. These impulses, which are in proportion to the volume being passed, are sent to the microprocessor system (m) which governs the programmed dosages. The feeding water flows through the water-softener (16) and feeds the following two circuits through the pump (15):

- the boiler feeding circuit through the manual charge tap (14) or an automatic level valve (2);
- feeding circuit for distributor units (17) through the check valve (11) and expansion valve (12) and said delivery volumetric meters (10).

The block diagram shown in Figure 4 explains the functional system better.

The above diagram further clarifies that a low voltage transformer (24) which feeds the microprocessor system (m) in the extractable and interchangeable unit (M) at low voltage (10-24V) is foreseen on a sole card. In the low voltage area, a programme element (33) and a memory element (RAM) are connected to the microprocessor (m) together with the distributor meters (10) and the analogue-digital converter (32), which in turn is connected with the respective regulating trimmers (ds) for all the programmings regarding the volumetric dosages of the coffee (i,i',i",i'''), the infusion times (if), delivery of hot water for tea (TEE) and for the boiler temperature programming (t). Further, the temperature probe (1) and the electric pressure transmitter (26) are connected and visualize the corresponding values on the display; lastly, the signal of the level probe and of the maximum probe (7,7') of the boiler are connected. The memory (RAM) is connected to the control panel in order to operatively determine the visualization of the graphic pressure bar in the upper line of the respective multi-function operative panel, the temperature display with the functional press-switch panel, as already explained and the press-switch panel to control delivery (i,i",i''') and, last of all, the tea press-switch.

The memory (RAM) is lastly connected to the various relays (23) controlling the solenoid valves of the distributor (EV1,EV2,EV3,EV4), pump (15), the tea solenoid valve (TEE), the solenoid valve for the distribution of the water in time (EV6), the relay for the heater block (36), the heating heaters (19) by means of the respective triacs (23")

The machine conveniently foresees that said means of lag consist of a timing device common to all distributor units (17) which acts on the sole relay (23) of the pump (15), as it is foreseen that the corresponding solenoid valve (EV1,EV2,EV3,...) is of the 3-way type and is normally closed. When the unit's distribution press-switch is pressed this puts the water main in communication, controlled by the check valve (11) and the overpressure valve (12), by means of the respective exchangers (13) in the boiler (4).

It is important to further notice that the said timing device can be set by a regulation means (if) which acts on the microprocessor system with analogue-digital converter (32), memory (RAM), programme (33) and microprocessor (m).

Figure 1 shows a 3-unit machine whereas the block diagram foresees a 4-unit machine, but it is evident that the said machine and the respective diagram can be extended for different numbers of units.

## Claims

1. COFFEE-MACHINE RUN BY MICROPROCESSOR WITH IMPROVED DEVICE FOR INFUSION EQUIPPED WITH SEVERAL UNITS, having a pressurized water boiler with controlled temperature (4) and a plurality of heat exchangers (13) to feed by water pump (15) the respective distributors (17) and solenoid valve means (EV1,EV2,EV3,...) utilizing the lag means of the pump delivery connection to the respective distributor with prior conveying of water at the normal mains pressure or, if the pressure is too low, at the steam saturation pressure present at that moment in the exchanger- ,**characterized** by the fact that it further comprises:
- means of control for delivery of coffee with infusion or otherwise, preset to actuate each distributor unit (17);
- a microprocessor system (M) connected to said solenoid valve means (EV1,EV2,EV3,...), respectively to said lag means and to said control means (i,i',i''') for the delivery of coffee with infusion or otherwise, able to:
- store the distributor unit subjected to the infusion control and to line up the respective commands in sequence:

- transmit a control in order to said sequence to the corresponding solenoid valve relating to the lag means of the distributor unit in question, so that the following cycles are actuated for each unit memorized in logical lined-up sequence:
- delivery lag from pump to said distributor;
- inflow of feed water at water mains pressure or at steam pressure present at that moment in the exchanger, for a preset quantity of water or time necessary for a convenient infusion time;
- the actual delivery by means of said pump at the normal delivery pressure.

2. A machine, according to claim 1, characterized by the fact that the said lag means consists of a timing device which is common to all the distributor units (17) working on the sole relay (23) of the pump (15) as the foreseen corresponding solenoid valve (EV1,EV2,EV3,...) is of the 3-way type and is normally closed, and when the unit delivery switch is pressed it puts the water main net in communication, controlled by a check valve (11) and an overpressure valve (12), through the respective exchangers (13) in the boiler(4).

3. A machine, as per claim 2, characterized by the fact that said timing device can be set by a regulation (if) which works on the microprocessor system with analogue-digital converter (32), memory (RAM), programme (33) and microprocessor (m).

4. A machine, as per claim 1, characterized by the fact that it comprises a microprocessor control system (M) to increase or otherwise the value of the normal temperature setting in respect to the saturation pressure in the "set point" boiler to an extent which is sufficient to perform at a condition where the normal utilization of steam is increased.

5. A machine, as per claim 1, characterized by the fact that this increase of pressure is between 0.1 and 0.5 bar.

6. A machine, as per claim 1, characterized by the fact that this increase in pressure is equal to 0.2 bar.

7. A machine, as per claim 1, characterized by the fact that said volumetric delivery meters (10) are connected by the said microprocessor system (M) to a visualization system having a fan design with a rose of luminous pilot lights which the said microprocessor system switches on by transmitting the delivery impulse count sequence of the respective said volumetric meters (10) of the distributors (17), so as to visualize the delivery in a dynamic manner, thus giving the operator the impression of seeing a fan in motion, the speed being in proportion to the delivery.

8. A machine, as per claim 1, characterized by the fact that it includes further means of programming which send a block switch-on signal to a rose of luminous pilot lights when it notes that the meter in question does not emit any signal of motion for a predetermined period of time.

9. A machine, as per claim 1, characterized by the fact that it further includes microprocessor means of monitoring and control (M) which activate the visualization of a luminous bar which indicates the variation from zero to "n" bar for the respective delivery pressure.

10. A machine, as per claim 1, characterized by the fact that it further includes microprocessor means of monitoring and control (M) which activate the visualization of the boiler temperature, alternately to the pressure, by means of computerized elaboration of the stored temperature data into equivalent steam saturation pressure data.

11. A machine, as per claim 1, characterized by the fact that it further includes microprocessor means of monitoring and control (M) which activate the visualization of a level indicator design of luminous signals corresponding to minimum and maximum.

12. A machine, as per claim 1, characterized by the fact that it also has five control keys corresponding to each distributor unit (17) to control the delivery of the types of coffee with respective clarifying designs showing the possibility of serving an espresso coffee (strong coffee), two espresso coffees (strong coffees), one weak coffee, two weak coffees and for continuous delivery with manual stop $(i, i', i''...)$ which are controlled by a microprocessor system (M) and whose parameters can be regulated by respective trimmers (ds).

13. A machine, as per claim 2, characterized by the fact that it has an extractable and interchangeable microprocessor (M) consisting of a sole card with a low voltage transformer (24) which feeds at low voltage (10-24V) the inside microprocessor system (m) to which the following means are connected, together with a programme element (33) and a memory element (RAM):
- means of visualization and multi-function control $(p, d, i, te, i' i'', i''')$;
- means of volumetric counting of delivery (10) for the respective distributors (17);
- means of analogue-digital conversion (32) which, in turn, are connected to the respective regulation trimmers (ds) for all the programmings regarding the volumetric dosages of the coffee $(i, i', i'', i''')$, of the infusion times (if), of delivery of hot water for tea (TEE) and for the programming of the boiler temperature (t), as a temperature probe in the boiler (1), an electric pressure transmitter (26) and level signals in the boiler $(7, 7')$ are also connected-driver relay means and respective relays $(23')$ which actuate the corresponding solenoid valves of the distributor units (EV1,EV2,EV3,EV4), the pump (15), the tea solenoid valve (TEE), the solenoid valve for delivery of water in time (EV6), the relay for heater block (36), the heating heaters (19), by means of the respective triacs (23).

FIG.1

EP 0 328 704 A1

p. LA SAN MARCO S.p.A.

The representative
D'AGOSTINI dr. Giovanni

F I G. 2

p. LA SAN MARCO S.p.A.
The representative
D'Agostini dr. Giovanni

FIG. 3

EP 0 328 704 A1

p. LA SAN MARCO S.p.A.
The representative
D'AGOSTINI dr. Giovanni

FIG. 4

EP 0 328 704 A1

p. LA SAN MARCO S.p.A.

the representative
D'AGOSTINI dr. Giovanni

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | US-A-3 364 842 (VALENTE) <br> * Column 4, line 55 - column 5, line 2; column 7, lines 56-72; figures 1,2 * <br> --- | 1 | A 47 J 31/52 <br> A 47 J 31/00 |
| A | EP-A-0 093 366 (ILLYCAFFE S.p.A.) <br> * Whole document * <br> ----- | 1,2 | |
| | | | TECHNICAL FIELDS SEARCHED (Int. Cl.4) <br><br> A 47 J |

The present search report has been drawn up for all claims

| Place of search | Date of completion of the search | Examiner |
|---|---|---|
| THE HAGUE | 26-10-1988 | SCHARTZ J. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P0401)